(19)

Europäisches
Patentamt
European
Patent Office
Office européen
des brevets

(11)     **EP 2 479 505 B1**

(12)     **EUROPEAN PATENT SPECIFICATION**

(45) Date of publication and mention
of the grant of the patent:
**19.09.2018  Bulletin 2018/38**

(51) Int Cl.:
**F24F 11/00** *(2018.01)*     **F24D 19/10** *(2006.01)*
**G01K 17/10** *(2006.01)*

(21) Application number: **12151915.1**

(22) Date of filing: **20.01.2012**

(54) **Heating-Cooling-Capacity measurement controlling and expenses-sharing system and method**

Steuerung der Heiz-Kühl-Kapazitätsmessung und System und Verfahren zum Teilen der Ausgaben

Contrôle de la mesure de la capacité de chauffage/refroidissement, système et procédé de partage
des dépenses

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.01.2011  CN 201110024400**

(43) Date of publication of application:
**25.07.2012  Bulletin 2012/30**

(73) Proprietors:
• **Grundfos Pumps (Shanghai) Co., Ltd.
Shanghai 200336 (CN)**
• **Grundfos Holding A/S
8850 Bjerringbro (DK)**

(72) Inventors:
• **Yang, Yusen
Beijing 100125 (CN)**

• **Li, Zheng
Shanghai 200336 (CN)**
• **Dyrbye, Karsten
8600 Silkeborg (DK)**
• **Pedersen, Casper
7800 Skive (DK)**
• **Du, Jun
Schanghai 200336 (CN)**
• **Ommen, Thomas
8310 Tranbjerg (DK)**

(74) Representative: **Plougmann Vingtoft a/s
Rued Langgaards Vej 8
2300 Copenhagen S (DK)**

(56) References cited:
**EP-A1- 0 035 085      EP-A2- 2 157 376
WO-A1-2008/039065   AT-B- 307 668
DE-A1- 3 047 510**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

## Description

The present invention relates to a heating-cooling-capacity measurement controlling and expenses-sharing system and method.

Presently, the method for heating measurement and expense calculation mainly comprises: household heating meter method, radiator heat distributor method, on-off time-area method, flow temperature method and temperature method.

The household heating meter method is a method in which the consumed heating capacity is measured directly by an ultrasonic heating meter or a mechanical heating meter installed on the household heating pipe path. However, the ultrasonic heating meter is expensive, so that its application in a common residential building is limited; the mechanical heating meter is difficult to be used widely because a jam may occur easily due to the weak quality of heating water. The radiator heat distributor method is a method in which a heating measurement is performed by measuring the heat radiating capacity of a household radiator, and which can not solve the inaccuracy of heating measurement due to heat transfer between neighbors and different heating consumptions of the households located at different positions of a building. In the on-off time-area method, a heating measurement is performed by measuring the heating time and the heating area of each household under the condition of a similar initiate indoor temperature for respective household. The accuracy of measurement in this method is susceptible to the average temperature, the type and the number of radiator, and the like, and the method cannot solve the problems of windows opening performed by household and heating transfer between neighbors. The flow temperature method substantially makes use of a constant flow ratio coefficient of each household in a heating system to perform a heating measurement. In the practice application, if a certain household heating system is stopped or is in maintenance, the flow sharing ratio of other households preset in the measurement system would be changed, and as a result, the household heating measurement would change a lot. Meanwhile, neither this method can solve the problem of heat transfer between neighbors and the like. The above-mentioned kinds of heating capacity measuring and expenses-sharing methods may produce a series of problems of inaccurate measurement, which may lead to an unfair expenses sharing and causes a controversy.

WO 2008/039065 A1 discloses a device for controlling a heating system for heating one or more rooms in a building, the control device comprising a heat meter of the invoicing type which is connectable to the feed conduit and/or return conduit and which is adapted to determine the power of the fluid sent through the conduit and to generate an indication of the heat supplied over a determined period. Further, the device comprises a control unit which can be connected to the fluid flow adjusting unit and which is adapted to control the power of the fluid passing through the fluid flow adjusting unit, wherein the control unit is connected to the heat meter and is adapted to control the fluid flow adjusting unit subject to the power determined by the heat meter. WO 2008/039065 A1 thereby discloses a heating-cooling-capacity measurement controlling and expenses-sharing system according the preamble of claim 1 and the associated method according to claim 11.

EP 0 035 085 A1 discloses an installation for the transport of heat by means of a fluid with at least one heat source, which is connected through ducts with at least one heat sink, a valve interposed in the ducts for the setting of the heat to be transported, two temperature sensors one of which being interposed in a duct conducting the fluid to the heat sink and the other one being interposed in a duct conducting the fluid away from the heat sink, a throughflow-meter interposed in one of these ducts, and measuring and control means, which are connected with the temperature sensors, the throughflow-meter and the valve to determine the transported heat from the measured temperatures and throughflows and to interrupt the heat flow from the heat source to the heat sink when the throughflow measured by the throughflow-meter falls to a lower limit value in an operational state. The valve serves on the one hand for the continuous variation of the heat flow and on the other hand for the interruption of the heat flow when the operational state occurs. The measuring and control means are constructed to define a target value for the heat flow as well as to determine the actual value of the heat flow from the measurement values of both the temperature sensors and the throughflow-meter and to regulate it by means of the valve.

AT 307 668 B discloses a device for determining an amount of water used by a central heating system which comprises a piping connected to a tank, and heat exchangers connected to the piping via supply pipes and return pipes of a plurality of units. In the return pipes, a device is arranged which measures the heat used and which calculates the amount to be paid for each unit.

An object of the present invention is to solve a problem of inaccurate measurement occurs in the conventional heating-cooling-capacity measurement controlling and expenses-sharing system and method.

To achieve the above object, the present invention provides a heating-cooling-capacity measurement controlling and expenses-sharing system having the features according to claim 1 and a heating-cooling-capacity measurement controlling and expenses-sharing method having the features according to claim 11. Preferred embodiments of the invention are defined in the respective dependent claims.

The heating-cooling-capacity measurement controlling and expenses-sharing system of the present invention is used to measure heating capacity or cooling capacity supplied to several households in a building, which is provided with a main water-supply pipe communicated with a terminal equipment of each household via a household water-supply pipe and a main water-return pipe communicated with the terminal equipment of each household via a household water-return pipe. The heating-cooling-capacity measurement controlling and expenses-sharing system includes preferably several household metering devices, each of which comprises: a temperature controller disposed in a house of each household and used to preset and measure indoor temperature; a flow meter disposed at the household water-supply pipe or the household water-return pipe and used to measure water inflow; a control valve disposed at the household water-supply pipe or the household water-return pipe and used to open or close the household water-supply pipe or the household water-return pipe; and a data processor for receiving flow data from the flow meter and preset temperature data and measured temperature data from the temperature controller, and being adapted to compare the preset temperature data with the measured temperature data of the temperature controller, adapted to control the opening or closing of the control valve and adapted to record a cumulative opening time of the control valve, wherein the data processor further is adapted to calculate the cooling capacity or the heating capacity of the household according to the preset temperature data, the measured temperature data, the flow data, the cumulative opening time of the control valve.

Preferably the heating-cooling-capacity measurement controlling and expenses-sharing system includes a main heat-cold meter for measuring total heating capacity or cooling capacity supplied to the building and the data processor also is adapted to receive the data from the main heat-cold meter for calculating the cooling capacity or the heating capacity of the household.

Preferably, the heating-cooling-capacity measurement controlling and expenses-sharing system further comprises: a return-water temperature sensor disposed at the household water-return pipe and used to measure return-water temperature; and a supply-water temperature sensor disposed at the household water-supply pipe and used to measure supply-water temperature; wherein the data processor is also adapted to receive return-water temperature data from the return-water temperature sensor and supply-water temperature data from the supply-water temperature sensor, and adapted to calculate the cooling capacity or heating capacity of the household according to the supply-water temperature data, the return-water temperature data, the preset temperature data, the measured temperature data, the flow data, the cumulative opening time of the control valve and the data from the main heat-cold meter.

The heating-cooling-capacity measurement controlling and expenses-sharing system further comprising a remote control center for receiving the cooling capacity or the heating capacity from the metering device of each of the households.

The data processor may be adapted to receive a stop command transmitted by the remote control center and adapted to control the closing of the control valve.

The flow meter may be a vortex shedding flow meter, a venturi flow meter or an orifice flow meter.

The control valve may be an electric on-off control ball valve, an electric thermal expansion valve or an electric dynamic hydraulic balance valve.

The flow meter and the control valve may be disposed separately.

The flow meter and the control valve may be integrated.

The flow meter may be a venturi flow meter which comprises a pipe-shaped housing, a venturi pipe disposed in the pipe-shaped housing, a joining pipe and a differential pressure transmitter inserted into the joining pipe, wherein an end of the joining pipe is communicated with the pipe-shaped housing in the front of the venturi pipe, and the other end thereof is communicated with the middle of the venturi pipe; and the control valve is an electric ball valve which includes a valve ball rotatably disposed in the pipe-shaped housing, a valve handle and an electrical actuator for driving the valve ball to rotate via the valve handle.

A heating-cooling-capacity measurement controlling and expenses-sharing method by using the above-mentioned heating-cooling-capacity measurement controlling and expenses-sharing system, is used to measure heating capacity or cooling capacity supplied to several households in a building to share expenses, the building being provided with a main water-supply pipe communicated with a terminal equipment of each household via a household water-supply pipe, and a main water-return pipe communicated with the terminal equipment of each household via a household water-return pipe, wherein the heating-cooling-capacity measurement controlling and expenses-sharing method comprises the steps of:

S1, disposing a main heat-cold meter for measuring total heating capacity or cooling capacity supplied to the building, at a heating entrance or a cooling entrance of the building;

S2, disposing a temperature controller for presetting and measuring indoor temperature, in an house of each household;

S3, disposing a flow meter for measuring water inflow, at the household water-supply pipe or the household water-return pipe;

S4, disposing a control valve for opening or closing the household water-supply pipe or the household water-return pipe, at the household water-supply pipe or the household water-return pipe of each household;

S5, disposing a data processor, which is used to receive the flow data from the flow meter and the preset temperature data and the measured temperature data from the temperature controller, and compare the preset temperature data with the measured temperature data of the temperature controller, thereby controlling the opening or closing of the control valve and recording an cumulative opening time of the control valve, and is further used to calculate the cooling capacity or the heating capacity supplied to the household according to the preset temperature data, the measured temperature data, the flow data, the cumulative opening time of the control valve and the data from the main heat-cold meter.

After the step S2 is performed, the method may further comprise a step of:

S2-1, disposing a return-water temperature sensor for measuring the return-water temperature, in each household water-return pipe; disposing a supply-water temperature sensor for measuring the supply-water temperature, in each household water-supply pipe;

wherein the data processor is further used to receive return-water temperature data from the return-water temperature sensor and supply-water temperature data from the supply-water temperature sensor, and calculate the cooling capacity or the heating capacity according to the supply-water temperature data, the return-water temperature data, the preset temperature data, the measured temperature data, the flow data, the cumulative opening time of the control valve and the data from the main heat-cold meter.

Wherein, after step S5 is performed, the method may further comprise a step of:
S6, disposing a remote control center for receiving the heating capacity or the cooling capacity transmitted by each household measuring device.
Wherein, after the step S6 is performed, the method may further comprise a step of:
S7, receiving a stop command from the remote control center and controlling the closing of the control valve by the data processor.
As known from the above solutions, the heating-cooling-capacity measurement controlling and expenses-sharing system and method of the present invention have the following advantages: since the temperature controller, the supply-water temperature sensor, the return-water temperature sensor, the flow meter and the control valve are provided in the present invention, a plurality of parameters may be extracted for the measurement, so that the accuracy of the measurement is increased. Especially, an introduction of the flow meter may eliminate the measurement error due to the actual flow change of a household and make the heating capacity measurement more accurate.
The above and other objects, features and advantages will become more apparent through the explanation of the preferred embodiments with reference to the accompanying drawings.

Fig.1 is a structural schematic view showing a heating-cooling-capacity measurement controlling and expenses-sharing system of the present invention;

Fig.2 is a control principle view of the heating-cooling-capacity measurement controlling and expenses-sharing system and method of the present invention;

Fig.3 is a structural schematic view showing an integration of a flow meter and a control valve in the heating-cooling-capacity measurement controlling and expenses-sharing system of the present invention;

Fig .4 is a diagram showing a relation between time and an opening and closing signal of the control valve, flow, supply-water and return-water temperature, and household heating-capacity consumption during the operation of the heating-cooling-capacity measurement controlling and expenses-sharing system of the present invention.

## EMBODIMENTS

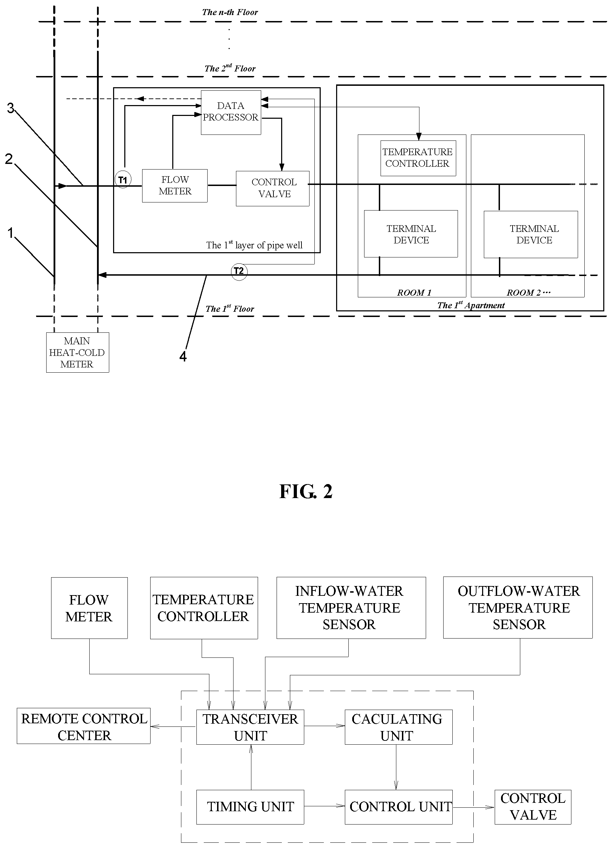

Exemplary embodiments of the present invention will be described in details hereinafter. It should be noted that the embodiments described herein are intended to illustrate only but not to limit the present invention.
As shown in Fig.1 and Fig.2, the heating-cooling-capacity measurement controlling and expenses-sharing system of the present invention is used to measure heating capacity or cooling capacity supplied to several households in a building. Generally, the heating and ventilating equipment and air conditioning system in a building are provided with a main water-supply pipe 1 and a main water-return pipe 2, and a terminal equipment of each household is communicated with the main water-supply pipe 1 via a household water-supply pipe 3 and the main water-return pipe 2 via a household water-return pipe 4. The terminal equipment of each household may be a heating equipment, such as a radiator, and so on, or may be a cooling equipment as well, such as a fan coil unit, and so on.
The heating-cooling-capacity measurement controlling and expenses-sharing system includes a main heat-cold meter, a remote control center and several household metering devices. The main heat-cold meter is disposed at a heating entrance or a cooling entrance of a building, and is used to measure a total heating capacity or a cooling capacity supplied to the building. Each of the household metering devices comprises a temperature controller, a return-water temperature sensor, a supply-water temperature sensor, a flow meter, and a data processor.

The temperature controller is disposed at a place in a house of each household where an indoor temperature of the house may be reflected, so that the household may set a value of temperature as needed. The temperature controller may further measure the indoor temperature of the house in real time.

The return-water temperature sensor is disposed at the house water-return pipe 4 and is used to measure a return-water temperature T2.

The supply-water temperature sensor is disposed at the household water-supply pipe 3 and is used to measure a supply-water temperature $T_1$.

The flow meter is disposed at the household water-supply pipe 3 or the household water-return pipe 4 and is used to measure water inflow. The flow meter may be a vortex shedding flow meter, a venturi flow meter, an orifice flow meter or other types of flow meters.

The control valve is disposed at the household water-supply pipe 3 or the household water-return pipe 4 and is used to open or close the household water-supply pipe 3 or the household water-return pipe 4. The control valve may be an electric on-off control ball valve, an electric thermal expansion valve, an electric dynamic hydraulic balance valve or the like. Especially, when the control valve is an electric dynamic hydraulic balance valve, the whole heating-cooling-capacity measurement controlling and expenses-sharing system may be provided with a function of dynamic balance adjustment.

The data processor is used to receive the flow data from the flow meter and the preset temperature data and the measured temperature data from the temperature controller, and compare the preset temperature data with the measured temperature data of the temperature controller, thereby controlling the opening or closing of the control valve and record a cumulative opening time of the control valve. Meantime, the data processor may further calculate the cooling capacity or the heating capacity of the household according to the preset temperature data, the measured temperature data, the cumulative opening time of the control valve and the total heating-cooling capacity value from the main heat-cold meter. The heating-capacity measurement and expense sharing of each household optimized on basis of the main heating-cooling meter is realized by optimizing the on-off time-area method, the flow temperature method, and the temperature method in the art, for example, a heating capacity or a cooling capacity consumed by each household is calculated according to the following formula:

$$G_i = \frac{\tau_i \cdot F_i \cdot q_i \cdot \Delta T_i}{\displaystyle\sum_{i=1}^{n} \tau_i \cdot F_i \cdot q_i \cdot \Delta T_i} G_0$$

wherein:

$G_i$ is the heating capacity or cooling capacity supplied to an i-th household;

$G_0$ is the total heating capacity or cooling capacity supplied to the whole building measured by the main heat-cold meter;

$q_i$ is the water inflow for the i-th household;

$F_i$ is the heating or cooling area for the i-th household;

$\tau_i$ is the cumulative opening time of the control valve for the i-th household;

$n$ is the amount of the households who share the main heat-cold meter; and

$\Delta T_i$ is the temperature difference between the supply-water temperature $T_1$ and the return-water temperature $T_2$, namely, $\Delta T_i = |T_1 - T_2|$.

The remote control center is used to receive a cooling capacity or a heating capacity of each household transmitted from each household metering device. When a terminal equipment of a household is required to be stopped, the remote control center may send a stop command to the data processor so as to control the closing of the control valve. The remote control center may be disposed at a heating supply department or a property management company, so that a stop operation of a heating or cooling service can be realized by remote control.

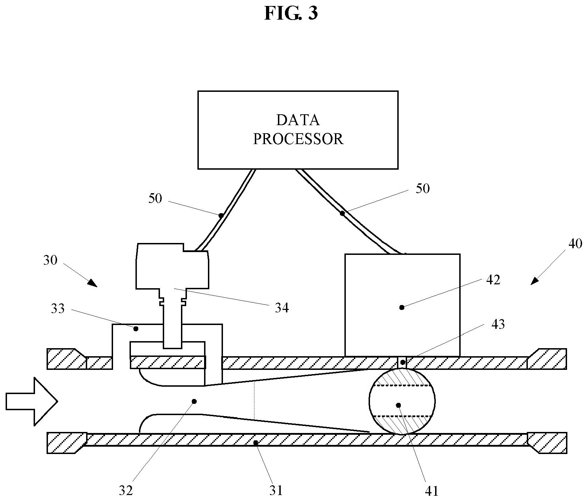

In the heating-cooling-capacity measurement controlling and expenses-sharing system of the present invention, it may be unnecessary to provide the supply-water temperature sensor and the return-water temperature sensor according to the actual situation and the requirement of the household, and correspondingly, this aspect need not to be considered when the heating or cooling capacity shared by each household is calculated. In addition, in the heating-cooling-capacity measurement controlling and expenses-sharing system of the present invention, the flow meter and the control valve is combined for use, so that the control valve may be closed when a water flow in the pipe line is lower than the minimum flow of the flow meter, which ensures the flow meter to operate between its maximum flow and its minimum flow, so that the flow may be measured more accurately and a flow meter with a small measurement range ratio may be applied widely to the system of the present invention. Since the flow meter with the small measurement range ratio is cheap, the cost of the system in the present invention is reduced. The flow meter and the control valve may be disposed separately, namely, they are two separate devices. Alternately, the flow meter and the control valve may be integrated together, thereby becoming an integrated structure with both the function of measurement and on-off control. As shown in Fig.3, the flow meter may be a venturi flow meter 30 comprising a pipe-shaped housing 31, a venturi pipe 32 disposed in the pipe-shaped housing 31, a joining pipe 33 and a differential pressure transmitter 34, wherein an end of the joining pipe 33 is communicated with the pipe-shaped housing 31 in the front of the venturi pipe 32, and the other end thereof is communicated with the middle of the venturi pipe 32, the differential pressure transmitter 34 is inserted in the joining pipe 33. The control valve may be an electric ball valve 40 which includes a valve ball 41 rotatably disposed in the pipe-shaped housing 31, an electrical actuator 42 and a valve handle 43, wherein the electrical actuator 42 is used to drive the valve ball 41 to rotate via the valve handle 43. Herein, the venturi flow meter 30 and the electric ball valve 40 share the pipe-shaped housing 31 in common. The differential pressure transmitter 34 in the venturi flow meter 30 transmits a measured pressure difference data to the data processor through a data line 50 or a wireless network, and the data processor calculates a flow passing through the housing 11 of the flow meter (that is, a flow in the liquid pipe line), and then compares the flow value with a minimum measurable flow of the venturi flow meter 30. If the flow value measured at this time is lower than the minimum measurable flow of the venturi flow meter 30, the data processor sends an instruction to the control valve so as to close the control valve. In the present invention, while the flow meter and the control valve are integrated, the installation of them may be completed as long as two ends of the pipe-shaped housing 31 are connected with the liquid pipe line by a flange or a screw, so that the installation is more convenient and quick and the installation efficiency is increased effectively.

The heating-cooling-capacity measurement controlling and expenses-sharing method of the present invention may be a method which is optimized based on the on-off time-area method, the temperature method, or the flow temperature method in the art.

**Method example 1**

The heating-cooling-capacity measurement controlling and expenses-sharing method of the present invention may be understood to be a method which is optimized based on the conventional on-off time-area method, comprising the following steps of:

S1, disposing a main heat-cold meter for measuring total heating capacity or cooling capacity supplied to a building, at a heating entrance or a cooling entrance of the building;

S2, disposing a temperature controller for presetting and measuring indoor temperature, in a house of each household;

S2-1, disposing a return-water temperature sensor for measuring the return-water temperature, at each household water-return pipe 4; disposing a supply-water temperature sensor for measuring the supply-water temperature, at each household water-supply pipe 3;

S3, disposing a flow meter for measuring water inflow, at the household water-supply pipe 3 or the household water-return pipe 4;

S4, disposing a control valve for opening or closing the household water-supply pipe 3 or the household water-return pipe, 4 at the household water-supply pipe 3 or the household water-return pipe 4 of each household;

S5, disposing a data processor, which is used to receive the flow data from the flow meter and the preset temperature data and the measured temperature data from the temperature controller, and compare the preset temperature data with the measured temperature data of the temperature controller, thereby controlling the opening or closing of the control valve and recording an cumulative opening time of the control valve. The data processor may be further used to calculate a cooling capacity or a heating capacity supplied to the household according to the preset temperature data, the measured temperature data, the cumulative opening time of the control valve and the data from the main heat-cold meter. The data processor may directly display the cooling capacity or the heating capacity, so that the household is able to know the situation in time.

S6, disposing a remote control center for receiving the heating capacity or the cooling capacity transmitted from each household measuring device. The cooling capacity or the heating capacity of each household may be collected by the remote control center. The remote control center may be disposed at a heating supply department or a property management company, thus, the heating supply department or the property management company is able to obtain the heating capacity measurement information or the cooling capacity measurement information of each household in time.

S7, when a terminal equipment of a household is required to be stopped, the remote control center may send a stop command to the data processor so as to control the closing of the control valve.

The data processor of the present invention may calculate a cooling capacity or a heating capacity of a household according to the preset temperature data, the measured temperature data, the cumulative opening time of the control valve and the total heating-cooling capacity value from the main heat-cold meter, and in consideration of a heating or cooling area of the household as well. For example, a heating capacity or a cooling capacity consumed by each household is calculated according to the following formula:

$$G_i = \frac{\tau_i \cdot F_i \cdot q_i \cdot \Delta T_i}{\displaystyle\sum_{i=1}^{n} \tau_i \cdot F_i \cdot q_i \cdot \Delta T_i} G_0$$

wherein:

$G_i$ is the heating capacity or cooling capacity supplied to an i-th household;

$G_0$ is the total heating capacity or cooling capacity supplied to the whole building measured by the main heat-cold meter;

$q_i$ is the water inflow for the i-th household;

$F_i$ is the heating or cooling area for the i-th household;

$\tau_i$ is the cumulative opening time of the control valve for the i-th household;

$n$ is the amount of the households who share the main heat-cold meter; and

$\Delta T_i$ is the temperature difference between the supply-water temperature $T_1$ and the return-water temperature $T_2$, namely, $\Delta T_i=|T_1-T_2|$.

In the heating-cooling-capacity measurement controlling and expenses-sharing method of the present invention, the S2-1 step of "disposing a return-water temperature sensor for measuring the return-water temperature, at each household water-return pipe 4; disposing a supply-water temperature sensor for measuring the supply-water temperature, at each household water-supply pipe 3" is an optional step and may be selected according to the specific situation and the requirement of household. When the step is not selected, the equation of $\Delta T_i=|T_1-T_2|$ is not used for calculating the heating capacity or cooling capacity consumed by each household.

**Method example 2**

The method of the present invention is a method optimized based on the conventional temperature method, and its steps are substantially the same as those of the method in the method example 1 which is optimized based on the conventional on-off time-area method. The heating-cooling-capacity measurement controlling and expenses-sharing method may be understood to be such a method in which the calculation formula for the heating capacity shared by each household introduces and adjusts some parameters, such as a liquid flow and a difference between the supply-water temperature and the return-water temperature, and so on, on the basis of the conventional temperature method. Therefore, compared to the conventional temperature method, the accuracy and reliability of the expense-sharing calculation are increased.

**Method example 3**

The method in the present invention is a method optimized based on the flow temperature method in the art, and its steps are substantially the same as those of the method in the method example 1 which is optimized based on the conventional on-off time-area method. The heating-cooling-capacity measurement controlling and expenses-sharing method may be understood to be such a method in which the calculation formula for the heating capacity shared by each household is a formula comprising the parameters of a household flow and a difference between the supply-water temperature and the return-water temperature, so that an error due to the flow change is eliminated, and the accuracy and reliability of the expense-sharing calculation are increased compared to the conventional temperature method.

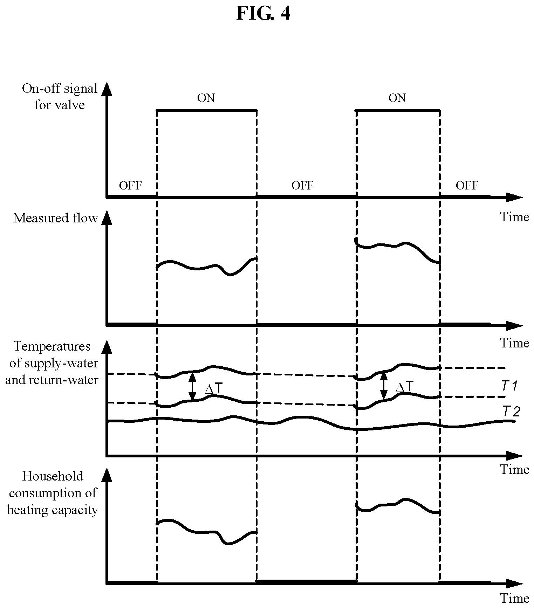

As shown in Fig.4, the heating-cooling-capacity measurement controlling and expenses-sharing method in the present invention collects not only an on-off time signal for valve and an indoor temperature signal, but also a water-supply flow signal and signals of a supply-water temperature and a return-water temperature, on basis of an accurate flow measurement. These abundant data signals can make the present system be suitable for various kinds of methods for calculating the shared heating capacity, such as the on-off time-area method, the temperature method, the flow temperature and so on. Specifically, the system and method of the present invention may have the following advantages.

Firstly, by combining a control valve for controlling an indoor temperature of each household and a flow meter with good through-flow performance and cheap price, the requirement related to a measurement range ratio of a flow meter in the conventional household heating meter standard is eliminated; on the other hand, the temperature control of each household is realized, and the defects such as a measurement error due to the lack of actual flow data in the conventional on-off time method, a measurement error due to the replacement of a radiator and the like are overcome.

Secondly, the problems such as heat transfer between neighbors, ends of building, housetop and so on, which can not be solved in the conventional household heating meter and the conventional evaporative heating distributor, may be effectively solved in the present invention; a minimum temperature is set by the temperature controller, that is, the temperature preset by terminal household is required to be not lower than the minimum temperature, so that the problem of the heat transfer between a heating household and a non-heating household, which can not be solved by the common household heating meter, is greatly weakened.

Thirdly, when a household opens the window, both a heating liquid flow and an open time of the control valve increase as the increase of the actual heating capacity consumed by the household, so that the problem of windows opening performed by the household, which can not be solved in conventional temperature method, may be solved.

Fourthly, since a through-flow area of the through-flow part is large, the present invention may be adapted well to different water quality and be not easy to be jammed, and may be unsusceptible to the type, the number change and the terminal radiation manner of the terminal equipment, thereby being widely usable in a common radiator, a radiant floor heating system, and even a capillary radiant heating system; the present invention may be directly used in an air conditioning and refrigerating system as well.

Fifthly, the system of the present invention is simple and has a good reliability, the expenses-sharing result of the heating-cooling capacity can be recorded in real time and recurred, which can make it be easily understood and accepted by the people and conform to the practical situation. Therefore, compared to other heating measuring manners, the system of the present invention has the advantages of high cost performance and real-time charging with no correction being required.

Sixthly, the system of the present invention is highly adaptable and is easily installed. Therefore, the system is not only adapted for a renovation to a heating-cooling measurement in an existing building, but also adapted for a new building, while only the equipment installation and commissioning is needed to be performed in the pipe well with the residents being disturbed lightly.

Seventhly, the system of the present invention is provided with a function of dynamic hydraulic balance adjustment by introducing an electric dynamic hydraulic balance valve, which may effectively solve a hydraulic maladjustment widely existing in conventional heating-cooling system of building.

The heating-cooling-capacity measurement controlling and expenses-sharing system and method in the present invention may be used for heating measurement, heating-cooling expenses sharing and household temperature control of a terminal household of a heating system. The terminal household of the heating system may be some application region covered by a heating system which require heating-cooling expenses sharing and individual temperature control, such as a residential household, a large commercial office building, a rented shop front of a large commercial building and the like. On the other hand, the heating-cooling-capacity measurement controlling and expenses-sharing system and method in the present invention may also be used for some application region covered by a central air conditioner or a regional cooling system which require heating-cooling expenses sharing and individual temperature control, such as a residential household, a large commercial office building, a rented shop front of a large commercial building and the like.

**Claims**

1. A heating-cooling-capacity measurement controlling and expenses-sharing system, for measuring heating capacity or cooling capacity supplied to several households in a building which is provided with a main water-supply pipe (1) communicated with a terminal equipment of each household via a household water-supply pipe (3), and a main water-return pipe (2) communicated with the terminal equipment of each household via a household water-return pipe (4), the heating-cooling-capacity measurement controlling and expenses-sharing system includes several household metering devices, **characterized in that** each household metering device comprises: a temperature controller disposed in a house of each household for presetting and measuring indoor temperature; a flow meter disposed at the household water-supply pipe (3) or the household water-return pipe (4) for measuring water inflow; a control valve disposed at the household water-supply pipe (3) or the household water-return pipe (4) for opening or closing the household water-supply pipe (3) or the household water-return pipe (4); and a data processor for receiving flow data from the flow meter and preset temperature data and measured temperature data from the temperature controller, and being adapted to compare the preset temperature data with the measured temperature data of the temperature controller, adapted to control the opening or closing of the control valve and adapted to record a cumulative opening time of the control valve, and adapted to calculate the cooling capacity or the heating capacity of the household according to the preset temperature data, the measured temperature data, the inflow data and the cumulative opening time of the control valve.

2. The heating cooling-capacity measurement controlling and expenses-sharing system according to claim 1, further comprising: a main heat-cold meter for measuring total heating capacity or cooling capacity supplied to the building wherein the data processor also is adapted to receive the data of the main heat-cold meter for calculating the cooling capacity or the heating capacity of the household.

3. The heating-cooling-capacity measurement controlling and expenses-sharing system according to claim 1 or 2, further comprising: a return-water temperature sensor disposed at the household water-return pipe (4) for measuring return-water temperature; and a supply-water temperature sensor disposed at the household water-supply pipe (3) for measuring supply-water temperature; wherein the data processor also is adapted to receive return-water temperature data from the return-water temperature sensor and supply-water temperature data from the supply-water temperature sensor, and adapted to calculate the cooling capacity or heating capacity of the household according to the supply-water temperature data, the return-water temperature data, the preset temperature data, the measured temperature data, the inflow data, the cumulative opening time of the control valve and the data of the main heat-cold meter.

4. The heating-cooling-capacity measurement controlling and expenses-sharing system according to one or more of the preceding claims, further comprising a remote control center for receiving the relative inflow data, the temperature data, the cooling capacity or the heating capacity of each household obtained by each household metering device.

5. The heating-cooling-capacity measurement controlling and expenses-sharing system according to one or more of the preceding claims, wherein the data processor is adapted to receive a stop command transmitted from the remote control center and adapted to control the closing of the control valve.

6. The heating-cooling-capacity measurement controlling and expenses-sharing system according to one or more of the preceding claims, wherein the flow meter is a vortex shedding flow meter, a venturi flow meter or an orifice flow meter.

7. The heating-cooling-capacity measurement controlling and expenses-sharing system according to one or more of the preceding claims, wherein the control valve is an electric on-off control ball valve, an electric thermal expansion valve or an electric dynamic hydraulic balance valve.

8. The heating-cooling-capacity measurement controlling and expenses-sharing system according to one or more of the preceding claims, wherein the flow meter and the control valve are disposed separately.

9. The heating-cooling-capacity measurement controlling and expenses-sharing system according to one or more of the preceding claims, wherein the flow meter and the control valve are integrated.

10. The heating-cooling-capacity measurement controlling and expenses-sharing system according to one or more of the preceding claims, wherein the flow meter is a venturi flow meter (30) which comprises a pipe-shaped housing (31), a venturi pipe (32) disposed in the pipe-shaped housing (31), a joining pipe (33) and a differential pressure transmitter (34) disposed in the joining pipe (33), an end of the joining pipe (33) is communicated with the pipe-shaped housing (31) in the front of the venturi pipe (32), and the other end is communicated with the middle of the venturi pipe (32); and the control valve is an electric ball valve (40) which includes a valve ball (41) rotatably disposed in the pipe-shaped housing (31), a valve handle (43) and an electrical actuator (42)for driving the valve ball (41) to rotate via the valve handle (43).

11. A heating-cooling-capacity measurement controlling and expenses-sharing method by using the heating-cooling-capacity measurement controlling and expenses-sharing system according to one or more of the preceding claims, for measuring heating capacity or cooling capacity supplied to several households in a building to share expenses, the building being provided with a main water-supply pipe (1) communicated with a terminal equipment of each household via a household water-supply pipe (3) and a main water-return pipe (2) communicated with the terminal equipment of each household via a household water-return pipe (4), **characterized in that** the heating-cooling-capacity measurement controlling and expenses-sharing method comprises the steps of:

S1, disposing a main heat-cold meter for measuring total heating capacity or cooling capacity supplied to the building at a heating entrance or a cooling entrance of the building;
S2, disposing a temperature controller in an house of each household for presetting and measuring indoor temperature;
S3, disposing a flow meter at the household water-supply pipe (3) or the household water-return pipe (4) for measuring water inflow;
S4, disposing a control valve at the household water-supply pipe (3) or the household water-return pipe (4) of each household for opening or closing the household water-supply pipe (3) or the household water-return pipe (4);
S5, disposing a data processor, wherein the data processor is used to receive inflow data from the flow meter and preset temperature data and measured temperature data from the temperature controller, and compare the preset temperature data with the measured temperature data of the temperature controller, thereby controlling the opening or closing of the control valve and recording an cumulative opening time of the control valve, while calculating the cooling capacity or the heating capacity supplied to the household according to the preset temperature data, the measured temperature data, the inflow data, the cumulative opening time of the control valve and the data of the main heat-cold meter.

**12.** The heating-cooling-capacity measurement controlling and expenses-sharing method according to one or more of the preceding claims, wherein after step S2 is performed, the method further comprises the step of:

S2-1, disposing a return-water temperature sensor in each household water-return pipe (4) for measuring the return-water temperature; disposing a supply-water temperature sensor in each household water-supply pipe (3) for measuring the supply-water temperature, wherein the data processor is also used to receive return-water temperature data from the return-water temperature sensor and supply-water temperature data from the supply-water temperature sensor, and calculate the cooling capacity or the heating capacity according to the supply-water temperature data, the return-water temperature data, the preset temperature data, the measured temperature data, the inflow data, the cumulative opening time of the control valve and the data of the main heat-cold meter.

**13.** The heating-cooling-capacity measurement controlling and expenses-sharing method according to one or more of the preceding claims, wherein after step S5 is performed, the method further comprises the step of:
S6, disposing a remote control center for receiving the heating capacity or the cooling capacity transmitted by each household measuring device.

**14.** The heating-cooling-capacity measurement controlling and expenses-sharing method according to one or more of the preceding claims, wherein after step S6 is performed, the method further comprises the step of:
S7, receiving a stop command from the remote control center and controlling the closing of the control valve by the data processor.

**Patentansprüche**

**1.** System zur Steuerung der Heiz-Kühl-Kapazitätsmessung und zum Teilen der Ausgaben, zum Messen von Heizkapazität oder Kühlkapazität, die an mehrere Haushalte in einem Gebäude bereitgestellt wird, das über ein Hauptwasserversorgungsrohr (1), das mit einer Anschlussausrüstung von jedem Haushalt über ein Haushaltswasserversorgungsrohr (3) kommuniziert, und ein Hauptwasserrückführrohr (2), das mit der Anschlussausrüstung von jedem Haushalt über ein Haushaltswasserrückführrohr (4) kommuniziert, verfügt, wobei das System zur Steuerung der Heiz-Kühl-Kapazitätsmessung und zum Teilen der Ausgaben mehrere Haushaltsmessvorrichtungen beinhaltet, **dadurch gekennzeichnet, dass** jede Haushaltsmessvorrichtung Folgendes umfasst: eine Temperatursteuerung, die in einem Haus von jedem Haushalt angeordnet ist, zum Voreinstellen und Messen von Innentemperatur; einen Durchflussmesser, der an das Haushaltswasserversorgungsrohr (3) oder das Haushaltswasserrückführrohr (4) zum Messen von Wasserzulauf angeordnet ist; ein Steuerventil, das an das Haushaltswasserversorgungsrohr (3) oder das Haushaltswasserrückführrohr (4) zum Öffnen oder Schließen des Haushaltswasserversorgungsrohrs (3) oder des Haushaltswasserrückführrohrs (4) angeordnet ist; und einen Datenprozessor zum Empfangen von Durchflussdaten von dem Durchflussmesser und von voreingestellten Temperaturdaten und gemessenen Temperaturdaten von der Temperatursteuerung, und dazu angepasst, die voreingestellten Temperaturdaten mit den gemessenen Temperaturdaten der Temperatursteuerung zu vergleichen, dazu angepasst, das Öffnen oder Schließen des Steuerventils zu steuern, und dazu angepasst, eine kumulative Öffnungszeit des Steuerventils aufzuzeichnen, und dazu angepasst, die Kühlkapazität oder die Heizkapazität des Haushalts gemäß den voreingestellten Temperaturdaten, den gemessenen Temperaturdaten, den Zuflussdaten und der kumulativen Öffnungszeit des Steuerventils zu berechnen.

**2.** System zur Steuerung der Heiz-Kühl-Kapazitätsmessung und zum Teilen der Ausgaben nach Anspruch 1, ferner Folgendes umfassend: einen Haupt-Heiz-Kühl-Messer zum Messen von gesamter Heizkapazität oder Kühlkapazität, die an das Gebäude bereitgestellt wird, wobei der Datenprozessor auch dazu angepasst ist, die Daten des Haupt-Heiz-Kühl-Messers zum Berechnen der Kühlkapazität oder der Heizkapazität des Haushalts zu empfangen.

**3.** System zur Steuerung der Heiz-Kühl-Kapazitätsmessung und zum Teilen der Ausgaben nach Anspruch 1 oder 2, ferner Folgendes umfassend: einen Rückführwassertemperatursensor, der an dem Haushaltswasserrückführrohr (4) angeordnet ist, zum Messen der Rückführwassertemperatur; und einen Versorgungswassertemperatursensor, der an dem Haushaltswasserversorgungsrohr (3) angeordnet ist, zum Messen der Versorgungswassertemperatur; wobei der Datenprozessor auch dazu angepasst ist, Rückführwassertemperaturdaten von dem Rückführwassertemperatursensor und Versorgungswassertemperaturdaten von dem Versorgungswassertemperatursensor zu empfangen, und dazu angepasst ist, die Kühlkapazität oder Heizkapazität des Haushalts gemäß den Versorgungswassertemperaturdaten, den Rückführwassertemperaturdaten, den voreingestellten Temperaturdaten, den gemessenen Temperaturdaten, den Zuflussdaten, der kumulativen Öffnungszeit des Steuerventils und den Daten des Haupt-Heiz-Kühl-Messers zu berechnen.

4.  System zur Steuerung der Heiz-Kühl-Kapazitätsmessung und zum Teilen der Ausgaben nach einem oder mehreren der vorhergehenden Ansprüche, ferner umfassend eine Fernsteuerzentrale zum Empfangen der relativen Zuflussdaten, der Temperaturdaten, der Kühlkapazität oder der Heizkapazität von jedem Haushalt, erlangt durch jede Haushaltsmessvorrichtung.

5.  System zur Steuerung der Heiz-Kühl-Kapazitätsmessung und zum Teilen der Ausgaben nach einem oder mehreren der vorhergehenden Ansprüche, wobei der Datenprozessor dazu angepasst ist, einen Stoppbefehl zu empfangen, der von der Fernsteuerzentrale übertragen wird und dazu angepasst ist, das Schließen des Steuerventils zu steuern.

6.  System zur Steuerung der Heiz-Kühl-Kapazitätsmessung und zum Teilen der Ausgaben nach einem oder mehreren der vorhergehenden Ansprüche, wobei der Durchflussmesser ein Wirbeldurchflussmesser, ein Venturi-Durchflussmesser oder ein Öffnungsdurchflussmesser ist.

7.  System zur Steuerung der Heiz-Kühl-Kapazitätsmessung und zum Teilen der Ausgaben nach einem oder mehreren der vorhergehenden Ansprüche, wobei das Steuerventil ein elektrisches Ein-Aus-Steuerkugelventil, ein elektrisches thermisches Expansionsventil oder ein elektrisches dynamisches hydraulisches Ausgleichsventil ist.

8.  System zur Steuerung der Heiz-Kühl-Kapazitätsmessung und zum Teilen der Ausgaben nach einem oder mehreren der vorhergehenden Ansprüche, wobei der Durchflussmesser und das Steuerventil separat angeordnet sind.

9.  System zur Steuerung der Heiz-Kühl-Kapazitätsmessung und zum Teilen der Ausgaben nach einem oder mehreren der vorhergehenden Ansprüche, wobei der Durchflussmesser und das Steuerventil integriert sind.

10. System zur Steuerung der Heiz-Kühl-Kapazitätsmessung und zum Teilen der Ausgaben nach einem oder mehreren der vorhergehenden Ansprüche, wobei der Durchflussmesser ein Venturi-Durchflussmesser (30) ist, der ein rohrförmiges Gehäuse (31), ein Venturi-Rohr (32), das in dem rohrförmigen Gehäuse (31) angeordnet ist, ein Verbindungsrohr (33) und einen Differenzdruckwandler (34), der in dem Verbindungsrohr (33) angeordnet ist, umfasst, wobei das Ende des Verbindungsrohrs (33) mit dem rohrförmigen Gehäuse (31) vorn am Venturi-Rohr (32) kommuniziert und das andere Ende mit der Mitte des Venturi-Rohrs (32) kommuniziert; und das Steuerventil ein elektrisches Kugelventil (40) ist, das eine Ventilkugel (41), die drehbar in dem rohrförmigen Gehäuse (31) angeordnet ist, einen Ventilgriff (43) und einen elektrischen Aktor (42) zum Antreiben der Ventilkugel (41), um sich über den Ventilgriff (43) zu drehen, beinhaltet.

11. Verfahren zur Steuerung der Heiz-Kühl-Kapazitätsmessung und zum Teilen der Ausgaben durch Verwenden des System zur Steuerung der Heiz-Kühl-Kapazitätsmessung und zum Teilen der Ausgaben nach einem oder mehreren der vorhergehenden Ansprüche, zum Messen von Heizkapazität oder Kühlkapazität, die an mehrere Haushalte in einem Gebäude bereitgestellt wird, um Kosten zu teilen, wobei das Gebäude über ein Hauptwasserversorgungsrohr (1), das mit einer Anschlussausrüstung von jedem Haushalt über ein Haushaltswasserversorgungsrohr (3) kommuniziert, und ein Hauptwasserrückführrohr (2), das mit der Anschlussausrüstung von jedem Haushalt über ein Haushaltswasserrückführrohr (4) kommuniziert, verfügt, **dadurch gekennzeichnet, dass** das Verfahren zur Steuerung der Heiz-Kühl-Kapazitätsmessung und zum Teilen der Ausgaben die folgenden Schritte umfasst:

    S1, Anordnen eines Haupt-Heiz-Kühl-Messers zum Messen von gesamter Heizkapazität oder Kühlkapazität, die an einem Heizeingang oder einen Kühleingang des Gebäudes an das Gebäude bereitgestellt wird;
    S2, Anordnen einer Temperatursteuerung in einem Haus von jedem Haushalt zum Voreinstellen und Messen von Innentemperatur;
    S3, Anordnen eines Durchflussmessers an dem Haushaltswasserversorgungsrohr (3) oder dem Haushaltswasserrückführrohr (4) zum Messen von Wasserzulauf;
    S4, Anordnen eines Steuerventils an dem Haushaltswasserversorgungsrohr (3) oder dem Haushaltswasserrückführrohr (4) von jedem Haushalt zum Öffnen oder Schließen des Haushaltswasserversorgungsrohrs (3) oder des Haushaltswasserrückführrohrs (4);
    S5, Anordnen eines Datenprozessors, wobei der Datenprozessor dazu verwendet wird, Zuflussdaten von dem Durchflussmesser und voreingestellte Temperaturdaten und gemessene Temperaturdaten von der Temperatursteuerung zu empfangen und die voreingestellten Temperaturdaten mit den gemessenen Temperaturdaten der Temperatursteuerung zu vergleichen, wodurch das Öffnen oder Schließen des Steuerventils gesteuert wird und eine kumulative Öffnungszeit des Steuerventils aufgezeichnet wird, während die Kühlkapazität oder die Heizkapazität, die an den Haushalt gemäß den voreingestellten Temperaturdaten, den gemessenen Temperaturdaten, den Zuflussdaten, der kumulativen Öffnungszeit des Steuerventils und der Daten des Haupt-Heiz-Kühl-Messers bereitgestellt wird, berechnet wird.

12. Verfahren zur Steuerung der Heiz-Kühl-Kapazitätsmessung und zum Teilen der Ausgaben nach einem oder mehreren der vorhergehenden Ansprüche, wobei nach dem Durchführen von Schritt S2 das Verfahren ferner den folgenden Schritt umfasst:

S2-1, Anordnen eines Rückführwassertemperatursensors in jedem Haushaltswasserrückführrohr (4) zum Messen der Rückführwassertemperatur; Anordnen eines Versorgungswassertemperatursensors in jedem Haushaltswasserversorgungsrohr (3) zum Messen der Versorgungswassertemperatur,

wobei der Datenprozessor auch dazu verwendet wird, Rückführwassertemperaturdaten von dem Rückführwassertemperatursensor und Versorgungswassertemperaturdaten von dem Versorgungswassertemperatursensor zu empfangen und die Kühlkapazität oder die Heizkapazität gemäß den Versorgungswassertemperaturdaten, den Rückführwassertemperaturdaten, den voreingestellten Temperaturdaten, den gemessenen Temperaturdaten, den Zuflussdaten, der kumulativen Öffnungszeit des Steuerventils und den Daten des Haupt-Heiz-Kühl-Messers zu berechnen.

13. Verfahren zur Steuerung der Heiz-Kühl-Kapazitätsmessung und zum Teilen der Ausgaben nach einem oder mehreren der vorhergehenden Ansprüche, wobei nach dem Durchführen von Schritt S5 das Verfahren ferner den folgenden Schritt umfasst:
S6, Anordnen einer Fernsteuerzentrale zum Empfangen der Heizkapazität oder der Kühlkapazität, die durch jede Haushaltsmessvorrichtung übertragen wird.

14. Verfahren zur Steuerung der Heiz-Kühl-Kapazitätsmessung und zum Teilen der Ausgaben nach einem oder mehreren der vorhergehenden Ansprüche, wobei nach dem Durchführen von Schritt S6 das Verfahren ferner den folgenden Schritt umfasst:
S7, Empfangen eines Stoppbefehls von der Fernsteuerzentrale und Steuern des Schließens des Steuerventils durch den Datenprozessor.

**Revendications**

1. Système de commande de mesure de capacité de chauffage/refroidissement et de partage des dépenses, pour mesurer la capacité de chauffage ou la capacité de refroidissement fournie à plusieurs ménages dans un bâtiment qui est doté d'un tuyau principal d'alimentation en eau (1) en communication avec un équipement terminal de chaque ménage par l'intermédiaire d'un tuyau d'alimentation en eau du ménage (3) et un tuyau principal de retour d'eau (2) en communication avec l'équipement terminal de chaque ménage par l'intermédiaire d'un tuyau de retour d'eau du ménage (4), ledit système de commande de mesure de capacité de chauffage/refroidissement et de partage des dépenses comprenant plusieurs dispositifs de mesure du ménage, **caractérisé en ce que** chaque dispositif de mesure du ménage comprend : un dispositif de commande de température disposé dans une maison de chaque ménage pour le préréglage et la mesure de la température intérieure ; un débitmètre disposé au niveau du tuyau d'alimentation en eau du ménage (3) ou du tuyau de retour d'eau du ménage (4) pour la mesure du flux entrant d'eau ; une soupape de commande disposée au niveau du tuyau d'alimentation d'eau du ménage (3) ou du tuyau de retour d'eau du ménage (4) pour ouvrir ou fermer le tuyau d'alimentation en eau du ménage (3) ou le tuyau de retour d'eau du ménage (4) ; et un processeur de données pour la réception de données de flux provenant du débitmètre et des données de température préréglée et des données de température mesurée provenant du dispositif de commande de température et étant conçu pour comparer les données de température préréglée avec les données de température mesurée du dispositif de commande de température, conçu pour commander l'ouverture ou la fermeture de la soupape de commande et conçu pour enregistrer un temps d'ouverture cumulé de la soupape de commande, et conçu pour calculer la capacité de refroidissement ou la capacité de chauffage du ménage en fonction des données de température préréglée, des données de température mesurée, des données de flux entrant et du temps d'ouverture cumulé de la soupape de commande.

2. Système de commande de mesure de capacité de chauffage/refroidissement et de partage des dépenses selon la revendication 1, comprenant en outre : un calorimètre principal pour la mesure de la capacité de chauffage ou de la capacité de refroidissement totale fournie au bâtiment, ledit processeur de données étant également conçu pour recevoir les données du calorimètre principal pour le calcul de la capacité de refroidissement ou de la capacité de chauffage du ménage.

**3.** Système de commande de mesure de capacité de chauffage/refroidissement et de partage des dépenses selon la revendication 1 ou 2, comprenant en outre : un capteur de température d'eau de retour disposé dans le tuyau de retour d'eau du ménage (4) pour mesurer la température d'eau de retour ; et un capteur de température d'eau d'alimentation disposé au niveau du tuyau d'alimentation en eau du ménage (3) pour mesurer la température d'eau d'alimentation ; ledit processeur de données étant également conçu pour recevoir des données de température d'eau de retour provenant du capteur de température d'eau de retour et des données de température d'eau d'alimentation provenant du capteur de température d'eau d'alimentation et conçu pour calculer la capacité de refroidissement ou la capacité de chauffage du ménage en fonction des données de température d'eau d'alimentation, des données de température d'eau de retour, des données de température préréglée, des données de température mesurée, des données de flux entrant, du temps d'ouverture cumulé de la soupape de commande et des données du calorimètre principal.

**4.** Système de commande de mesure de capacité de chauffage/refroidissement et de partage des dépenses selon l'une ou plusieurs des revendications précédentes, comprenant en outre un centre de commande à distance pour recevoir les données de flux entrant relatives, les données de température, la capacité de refroidissement ou la capacité de chauffage de chaque ménage obtenue par chaque dispositif de mesure du ménage.

**5.** Système de commande de mesure de capacité de chauffage/refroidissement et de partage des dépenses selon l'une ou plusieurs des revendications précédentes, ledit processeur de données étant conçu pour recevoir une commande d'arrêt transmise depuis le centre de commande à distance et conçu pour commander la fermeture de la soupape de commande.

**6.** Système de commande de mesure de capacité de chauffage/refroidissement et de partage des dépenses selon l'une ou plusieurs des revendications précédentes, ledit débitmètre étant un débitmètre à tourbillons, un débitmètre Venturi ou un débitmètre d'orifice.

**7.** Système de commande de mesure de capacité de chauffage/refroidissement et de partage des dépenses selon l'une ou plusieurs des revendications précédentes, ladite soupape de commande étant une soupape à bille de commande marche-arrêt électrique, une soupape de dilatation thermique électrique ou une soupape d'équilibrage hydraulique dynamique électrique.

**8.** Système de commande de mesure de capacité de chauffage/refroidissement et de partage des dépenses selon l'une ou plusieurs des revendications précédentes, ledit débitmètre et ladite soupape de commande étant disposés séparément.

**9.** Système de commande de mesure de capacité de chauffage/refroidissement et de partage des dépenses selon l'une ou plusieurs des revendications précédentes, ledit débitmètre et ladite soupape de commande étant intégrés.

**10.** Système de commande de mesure de capacité de chauffage/refroidissement et de partage des dépenses selon l'une ou plusieurs des revendications précédentes, ledit débitmètre étant un débitmètre Venturi (30) comprenant un boîtier en forme de tuyau (31), un tuyau Venturi (32) disposé dans le boîtier en forme de tuyau (31), un tuyau de raccordement (33) et un transmetteur de différence de pression (34) disposé dans le tuyau de raccordement (33), une extrémité du tuyau de raccordement (33) étant en communication avec le boîtier en forme de tuyau (31) sur le devant du tube Venturi (32) et l'autre extrémité étant en communication avec la milieu du tuyau Venturi (32) ; et ladite soupape de commande étant une soupape à bille électrique (40) comprenant une bille de soupape (41) disposée de façon à pouvoir tourner dans le boîtier en forme de tuyau (31), une poignée de soupape (43) et un actionneur électrique (42) pour entraîner la bille de soupape (41) en rotation par l'intermédiaire de la poignée de soupape (43).

**11.** Procédé de commande de mesure de capacité de chauffage/refroidissement et de partage des dépenses à l'aide du système de commande de mesure de capacité de chauffage/refroidissement et de partage des dépenses selon l'une ou plusieurs des revendications précédentes, pour mesurer la capacité de chauffage ou la capacité de refroidissement fournie à plusieurs ménages dans un bâtiment pour partager les dépenses, ledit bâtiment étant fourni avec un tuyau d'alimentation en eau principal (1) en communication avec un équipement terminal de chaque ménage par l'intermédiaire d'un tuyau d'alimentation en eau du ménage (3) et un tuyau de retour d'eau principal (2) en communication avec l'équipement terminal de chaque ménage par l'intermédiaire d'un tuyau de retour d'eau du ménage (4), **caractérisé en ce que** le procédé de commande de mesure de capacité de chauffage/refroidissement et de partage des dépenses comprend les étapes de :

S1, mise en place d'un calorimètre principal pour la mesure de capacité totale de chauffage ou de capacité totale de refroidissement fournie au bâtiment au niveau d'une entrée de chauffage ou d'une entrée de refroidissement du bâtiment ;

S2, mise en place d'un dispositif de commande de température dans une maison de chaque ménage pour le préréglage et la mesure de la température intérieure ;

S3, mise en place d'un débitmètre au niveau du tuyau d'alimentation en eau du ménage (3) ou du tuyau de retour d'eau du ménage (4) pour la mesure du flux entrant d'eau ;

S4, mise en place d'une soupape de commande au niveau du tuyau d'alimentation en eau du ménage (3) ou du tuyau de retour d'eau du ménage (4) de chaque ménage pour ouvrir ou fermer le tuyau d'alimentation en eau du ménage (3) ou le tuyau de retour d'eau du ménage (4) ;

S5, mise en place d'un processeur de données, ledit processeur de données étant utilisé pour recevoir des données de flux entrant provenant du débitmètre et des données de température préréglée et des données de température mesurée provenant du dispositif de commande de température et pour comparer les données de température préréglée avec les données de température mesurée du dispositif de commande de température, commandant ainsi l'ouverture ou la fermeture de la soupape de commande et enregistrant un temps d'ouverture cumulée de la soupape de commande tout en calculant la capacité de refroidissement ou la capacité de chauffage fournie au ménage en fonction des données de température préréglée, des données de température mesurée, des données de flux entrant, du temps d'ouverture cumulé de la soupape de commande et des données du calorimètre principal.

12. Procédé de commande de mesure de capacité de chauffage/refroidissement et de partage de dépenses selon l'une ou plusieurs des revendications précédentes, après que l'étape S2 a été effectuée, ledit procédé comprenant en outre l'étape de :

S2-1, mise en place d'un capteur de température d'eau de retour dans chaque tuyau de retour d'eau du ménage (4) pour la mesure de la température d'eau de retour ; mise en place d'un capteur de température d'eau d'alimentation dans chaque tuyau d'alimentation en eau du ménage (3) pour la mesure de la température d'eau d'alimentation,

ledit processeur de données étant également utilisé pour recevoir des données de température d'eau de retour provenant du capteur de température d'eau de retour et des données de température d'eau d'alimentation provenant du capteur de température d'eau d'alimentation et calculer la capacité de refroidissement ou la capacité de chauffage en fonction des données de température de l'eau d'alimentation, des données de température d'eau de retour, des données de température préréglée, des données de température mesurée, des données de flux entrant, du temps d'ouverture cumulé de la soupape de commande et des données du calorimètre principal.

13. Procédé de commande de mesure de capacité de chauffage/refroidissement et de partage de dépenses selon l'une ou plusieurs des revendications précédentes, après que l'étape S5 a été effectuée, ledit procédé comprenant en outre l'étape de :

S6, mise en place d'un centre de commande à distance pour recevoir la capacité de chauffage ou la capacité de refroidissement transmise par chaque dispositif de mesure du ménage.

14. Procédé de commande de mesure de capacité de chauffage/refroidissement et de partage de dépenses selon l'une ou plusieurs des revendications précédentes, après que l'étape S6 a été effectuée, ledit procédé comprenant en outre l'étape de :

S7, réception d'une commande d'arrêt provenant du centre de commande à distance et la commande de la fermeture de la soupape de commande par le processeur de données.

EP 2 479 505 B1

*The n-th Floor*

*The 2nd Floor*

DATA
PROCESSOR

TEMPERATURE
CONTROLLER

3

2

T1

FLOW
METER

CONTROL
VALVE

TERMINAL
DEVICE

TERMINAL
DEVICE

1

The 1st layer of pipe well

T2

*ROOM 1*

*ROOM 2 ···*

*The 1st Apartment*

*The 1st Floor*

4

MAIN
HEAT-COLD
METER

**FIG. 2**

| FLOW METER | TEMPERATURE CONTROLLER | INFLOW-WATER TEMPERATURE SENSOR | OUTFLOW-WATER TEMPERATURE SENSOR |

REMOTE CONTROL
CENTER

TRANSCEIVER
UNIT

CACULATING
UNIT

TIMING UNIT

CONTROL UNIT

CONTROL
VALVE

15

**FIG. 3**

# FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008039065 A1
- EP 0035085 A1
- AT 307668 B